Europäisches Patentamt

European Patent Office

Office européen des brevets

(11) Veröffentlichungsnummer: **0 117 389**
**A2**

(12) **EUROPÄISCHE PATENTANMELDUNG**

(21) Anmeldenummer: **84100013.6**

(22) Anmeldetag: **02.01.84**

(51) Int. Cl.³: **F 24 D 3/10**

(30) Priorität: **23.02.83 HU 62783**

(43) Veröffentlichungstag der Anmeldung: **05.09.84**
**Patentblatt 84/36**

(84) Benannte Vertragsstaaten: **AT BE CH DE FR GB IT LI NL SE**

(71) Anmelder: **FÜTÖBER Epületgépészeti Termékeket Gyárto Vállalat, Gvadányi u. 67, H-1475 Budapest (HU)**

(72) Erfinder: **Kiss, László, Dipl.-Ing., Luther Márton utca 38, H-1044 Budapest (HU)**

(74) Vertreter: **Kern, Wolfgang et al, Patentanwälte Dipl.-Ing. Wolfgang Kern, Dipl.-Ing. Herbert Tischer Albert Rosshaupter Strasse 65, D-8000 München 70 (DE)**

(54) **Ausdehnungsbehälter.**

(57) Die Erfindung betrifft einen geschlossenen oder offenen Ausdehnungsbehälter, insbesondere für Heizungs-, Kühlungs- und andere, ein Volumen veränderbares flüssiges Übertragungsmittel enthaltende Systeme. Bei diesem Ausdehnungsbehälter ist die Einfüllöffnung für das Übertragungsmittel am unteren Teil des Behälters angeordnet. Bei geschlossenem Behälter befindet sich über dem Übertragungsmittel ein Luftpolster, bei offenem Behälter die Atmosphäre. Zwischen dem Übertragungsmittel und dem Luftpolster ist ein Trennmittel vorgesehen. Zur Verhinderung der Korrosion des Ausdehnungsbehälters weist dieser einen Entöler auf, der aus einem das Niveau des Übertragungsmittels abfühlenden Fühler und aus einem damit in Verbindung stehenden, entweder zwischen dem Behälter und dem System angeordneten oder in die Einfüllöffnung oder in den Behälter eingebauten, nur die Ausströmung des Übertragungsmittels und des Trennmittels unterbrechenden Organ besteht.

ACTORUM AG

PATENTANWÄLTE                           0117389

# TISCHER · KERN & BREHM

Albert-Rosshaupter-Strasse 65 · D 8000 München 70 · Telefon (089) 7605520 · Telex 05-212284 patsd · Telegramme Kernpatent München

## AUSDEHNUNGSBEHÄLTER

Die Erfindung betrifft einen geschlossenen oder offenen Ausdehnungsbehälter, insbesondere für Heizungs-, Kühlungs- und andere ein Volumen veränderbares flüssiges Übertragungsmittel enthaltende Systeme, bei welchem Ausdehnungsbehälter die das Übertragungsmittel einführende Öffnung am unteren Teil des Behälters angeordnet ist, und bei geschlossenem Behälter über dem Übertragungsmittel ein Luftpolster und bei offenem Behälter die Athmosphäre vorhanden ist, wobei zwischen dem Übertragungsmittel und dem Luftpolster ein Trennmittel vorhanden ist.

0117389

Die Aufgabe des Ausdehnungsbehälters in den erwähnten Heiz- oder anderen Ausdehnungssystemen besteht darin, die Volumenveränderung auszugleichen. Ausserdem ist es vom Standpunkt der Korrosion aus ausserordentlich wichtig, dass durch den Ausdehnungsbehälter so wenig Sauerstoff wie möglich in das System gelangt. Beim Auswerten einer Lösung müssen dabei auch die ökonomischen und sicherheitstechnischen Standpunkte in Betracht gezogen werden.

Zur Lösung dieser Aufgabe werden bereits seit langer Zeit offene Ausdehnungsbehälter angewendet. Der Nachteil dieser Lösung besteht darin, dass sich die Oberfläche des im Ausdehnungsbehälter befindlichen Wassers mit der Atmosphäre berührt und deshalb von dieser Sauerstoff aufnehmen kann. Die Sauerstoffaufnahme kann sich besonders erhöhen, falls die Umlaufpumpe ungünstig bemessen ist, was zu einer übermässigen Korrosion des Systems führt.

Zur Verhinderung der Korrosion von offenen Heizsystemen ist eine Lösung bekannt, bei welcher auf die Wasseroberfläche eine Sauerstoff nicht durchlassende Trennflüssigkeit, z.B. Öl geführt wird. Eine solche Ausführung ist in der GB-PS Nr. 1 401 366 beschrieben. Der Nachteil dieser Lösung besteht darin, dass das Eindringen der Trennflüssigkeit in das Heizsystem nicht behindert wird. Ausserdem kann der Ausdehnungsbehälter - den anderen offenen Ausdehnungsbehältern ähnlich - nur an dem obersten Punkt des Heizsystems angeordnet werden. Diese Tatsache verursacht viele Schwierigkeiten bei der Projektierung und Inbetriebhaltung von Heizsystemen.

Zur Beseitung dieser Nachteile wurden die geschlossenen Systeme und die zu diesen notwendigen Ausdehnungsbehälter ausgebildet. Die einfachste Konstruktion, welche am günstigsten bei kleinen Systemen angewendet werden kann, ist der Ausdehnungsbehälter mit veränderbarem Druck. Bei dieser Lösung ist in dem Behalter eine Gummimembrane angeordnet, welche das Ausdehnungssystem von dem die Ausdehnung ausgleichenden Gaspolster trennt. Der Nachteil dieser Ausführung ist,
dass sich wegen der eingefüllten konstanten Gasmenge der
Druck des Systems während der Ausdehnung ändert. Ein
weiterer Nachteil des Ausdehnungsbehälters mit veränderbarem
Druck ist, dass das Verhältnis des nützlichen Volumens und
des vollständigen Volumens verhältnismässig ungünstig ist,
wodurch sich besonders bei grossen Systemen Behälter von
ausserordentlich grossen Abmessungen ergeben. Zur Verbesserung des Ausnützens des Volumens bei geschlossenen
Ausdehnungsbehältern wurden die Ausdehnungsbehälter von
konstantem Druck zustandegebracht, von denen drei Ausführungen bekannt sind.

Bei der einfachsten Ausführung wird über die Oberfläche der Flüssigkeit mit einem Kompressor Luft eingeblasen.
Bei Ausdehnung kann die Luft durch ein Auslassventil ausgelassen werden, wodurch der Druck im System auf einem
konstanten Wert gehalten wird. Beim Zusammenziehen des
Systems bläst der Kompressor wieder Luft über die Wasseroberfläche. Der Nachteil dieser Lösung ist, dass die
Flüssigkeit mit der Luft unmittelbar in Berührung kommt
und von dieser Sauerstoff aufnimmt.

Zur Beseitigung dieses Nachteils wurde die in der
DE-PS Nr. 2 212 654 beschriebene Ausführung angewendet, bei
welcher über die Wasserfläche Inertgas z.B. Stickstoff eingeführt wird. In diesem Fall bedeutet es einen Nachteil,
dass die Gasflasche von Zeit zu Zeit ausgewechselt werden
soll, d.h. das System kann nicht ohne Überwachung bzw.
Wartung arbeiten, ausserdem ist die Gasflasche gefährlich.

Zur Beseitigung dieser Nachteile wurde eine Konstruktion zustandegebracht, bei welcher die Flüssigkeit mit Hilfe
einer Gummimembrane von dem über die Flüssigkeit geführten
gasartigen Mittel getrennt wird, welches Mittel zweckmässig
auch Luft sein kann. Die Nachteile dieser Lösung sind die

0117389

folgenden:

- Die der Gummimembrane gegenüber gestellten Anforderungen sind ausserordentlich streng, wodurch die Gummimembrane ein kostspieliges Bestandteil wird,

- bei eventuellem Fehlerhaftwerden der Gummimembrane kann, von den Druckverhältnissen abhängig, entweder die Flüssigkeit durch das Abblasventil aus dem System entweichen oder Luft in die Flüssigkeit gelangen,

- der Stoff der Gummimembrane muss ölbeständig sein, denn im Gegenfall muss ein ölfreier Teflonkompressor angewendet werden. Als Folge ziehen beide Lösungen die Erhöhung der Kosten nach sich,

- wegen der Membrane ist kein eindeutiger Zusammenhang zwischen der Menge des im Behälter vorhandenen Wassers und dem Wasserniveau. Demzufolge können die herkömmlichen Verfahren zum Anzeigen und Messen des Wasserniveaus nicht angewendet werden. Anstatt dessen muss der Behälter flexibel an das System angeschlossen werden und das Messen des Wasserniveaus muss auf Gewichtmessung zurückgeführt werden. Diese Lösung ist aus sicherheitstechnischen Gründen ungünstig. Z.B. in dem einen Fall kann der angewendete federnde Fuss wegen Korrosion oder anderen Gründen eingeklemmt werden. In einem anderen Fall z.B. wird dem Behälter etwas angestützt, der unter den Behälter gelangte Gegenstand kann so die freie Bewegung des Behälters behindern, was wiederum zu einer fehlerhaften Arbeitsweise führt.

Die Aufgabe der Erfindung ist, einen geschlossenen oder offenen Ausdehnungsbehälter für ein Heizungssystem oder andere, sein Volumen veränderbares Übertragungsmittel enthaltende Systeme zustande zu bringen, welcher Behälter die Nachteile der bekannten Lösungen beseitigt und derart ausgebildet ist, dass das Übertragungsmittel des Systems unter keinen Umständen Sauerstoff aus dem die Ausdehnung ausgleichenden Gas aufnehmen kann. Eine weitere Aufgabe der Erfindung besteht darin, dass die Verhältnisse des Inbetriebhaltens, d.h. konstanter Druck und die Verhinderung dessen, dass Verunreinigungen in das System gelangen, sowie die sicherheitstechnischen Verhältnisse, d.h. eine zuverlässige Flüssigkeitsniveaumessung, im höchsten Masse erfüllt werden und gleichzeitig die Kosten verringert werden.

Diese Aufgabe wird erfindungsgemäss dadurch gelöst, dass der Ausdehnungsbehälter einen Entöler aufweist, der aus einem das Niveau des Übertragungsmittels fühlenden Fühler und aus einem damit in Verbindung stehenden, entweder zwischen dem Behälter und dem System oder in die Einführöffnung oder in den Behälter eingebauten, nur die Ausströmung des Übertragungsmittels und des Trennmittels unterbrechenden Organ besteht.

Der Entöler besteht vorteilhaft aus einem Niveaufühler, aus einer mit diesem in Verbindung stehenden Ausblasöffnung, sowie aus einem Ausdehnungsrohr, das in einen mit der Abblasöffnung gemeinsamen Raum einmündet und unter dem Öffnungsniveau des Niveaufühlers endet.

Zweckmässig besteht der in die Einführöffnung eingebaute Entöler aus einem mit der Einführöffnung unmittelbar in Verbindung stehenden Niveaufühler.

Die Vorteile des erfindungsgemässen Ausdehnungsbehälters sind die folgenden.

Die Korrosion des Systems verursachende Sauerstoffaufnahme wurde sowohl in dem geschlossenen als auch in dem offenen System vollkommen beseitigt. 80% des Volumens des Ausdehnungsbehälters ist nützliches Volumen. Das die Sauerstoffaufnahme behindernde Trennmittel kann nicht in das System gelangen. Zum Messen und Fühlen des Flüssigkeitsniveaus können genaue und zuverlässige Methoden verwendet werden. Das Trennmittel altert im Gegensatz zu der Gummimembrane nicht und wird nicht fehlerhaft, so dass die Vorrichtung zuverlässig arbeitet und sich die Kosten der Wartung und der Reparationen verringern. Diese Vorteile entstehen dadurch, dass die kostspieligen Gummimembrane und der kostspielige ölfreie Kompressor weggelassen werden. Ein weiterer Vorteil der erfindungsgemässen Lösung ist, dass die bereits vorhandenen offenen Ausdehnungsbehälter einfach umgeformt werden können, wodurch die Korrosion der bereits vorhandenen Systeme beseitigt werden kann.

Die Erfindung wird anhand eines Ausführungsbeispiels näher erläutert. In den Zeichnungen zeigen

Fig. 1 die prinzipielle Ausbildung des erfindungsgemässen Ausdehnungsbehälters,

Fig. 2 den erfindungsgemässen Ausdehnungsbehälter im Schnitt,

Fig. 3 den erfindungsgemässen Ausdehnungsbehälter im Schnitt, wenn das Niveau des Übertragungsmittels abgesunken ist,

Fig. 4 den Ausdehnungsbehälter mit einem in die Einführungsöffnung eingebauten Entöler,

Fig. 5 den Ausdehnungsbehälter gemäss Fig. 4, wenn das Niveau des Übertragungsmittels abgesunken ist,

Fig. 6 einen offenen Ausdehnungsbehälter mit einem in den Behälter eingebauten Entöler.

In dem zur Heizung, Kühlung bzw. zu anderen, sein Volumen veränderbares Übertragungsmittel 3 enthaltenden Systemen 2 angewendeten geschlossenen Ausdehnungsbehälter 1 ist unten ein Übertragungsmittel 3 oben ein Luftpolster 4 und zwischen den beiden ein Trennmittel 5 vorhanden. Das Trennmittel 5 kann irgendein bekanntes Mittel sein, das verhindert, dass das Übertragungsmittel 3 aus dem Luftpolster 4 Sauerstoff aufnehmen kann.

Auf dem Deckel des Ausdehnungsbehälters 1 sind ein Stutzen 9 zum Ein- und Ausführen der Luft, und am Boden des Ausdehnungsbehälters 1 ein Stutzen 10 zum Entleeren des Behälters angebracht. Am unteren Teil des Ausdehnungsbehälters 1 ist ausserdem eine das Übertragungsmittel 3 einführende Öffnung 7 ausgebildet, die durch eine Rohrleitung 15 mit dem System 2 verbunden ist.

Das Entweichen des Trennmittels 5 aus dem Ausdehnungsbehälter 1 wird durch einen Entöler 11 verhindert. Der Entöler 11 besteht aus einem das Niveau des Übertragungsmittels
fühlenden Fühler 6 sowie aus einem mit diesem in Verbindung
stehenden, nur die Ausströmung des zwischen dem Behälter 1
und dem System 2 strömenden Übertragungsmittels 3 und des
Trennmittels 5 unterbrechenden Organ 8. Dieses Organ 8 kann
entweder zwischen den Behälter 1 und das System 2 oder in
die Einführöffnung 7 oder in den Ausdehnungsbehälter 1 eingebaut werden.

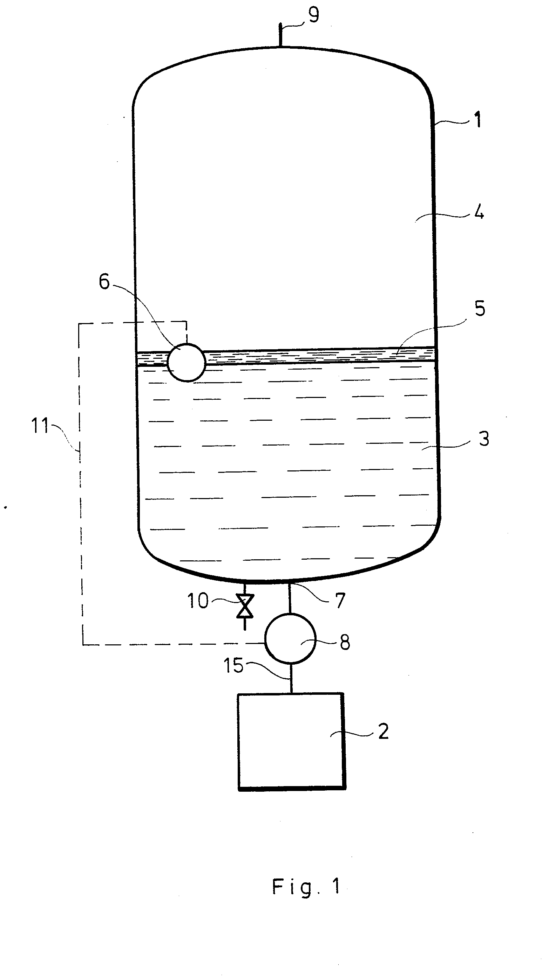

Bei der in Fig. 1 dargestellten Ausführung ist das
Organ 8 zwischen dem Ausdehnungsbehälter 1 und dem System 2
eingebaut. Dieses Organ kann die Kombination eines Rückschlagventils und eines durch den Fühler gesteuerten Ventils, oder
irgendein bekanntes Element sein, das die Strömung nur in
einer Richtung unterbricht.

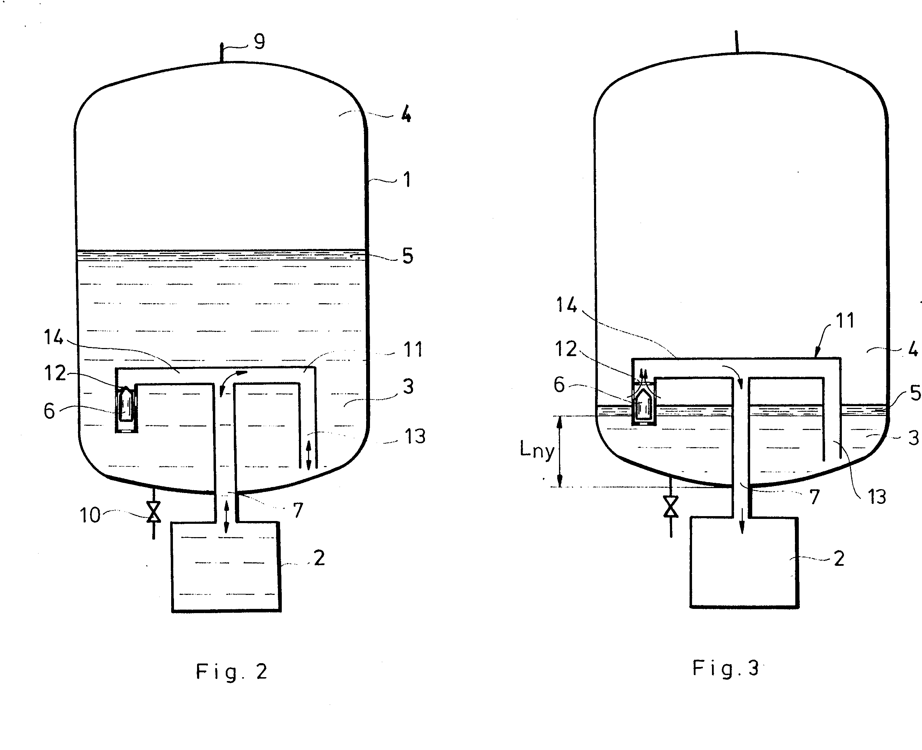

In den Figuren 2 und 3 ist der Entöler 11 in dem Ausdehnungsbehälter 1 eingebaut. An die das Übertragungsmittel
3 einführende Öffnung 7 ist ein T-förmiges Element angeschlossen, dessen kürzerer Arm den Fühler 6 enthält. Der
Fühler ist der Abblasöffnung 12 angeschlossen. Der andere
Arm des T-förmigen Elementes ist ein Ausdehnungsrohr 13,
das unter dem Öffnungsniveau $L_{NY}$ des Fühlers 6 endet. Zwischen
der Abblasöffnung 12 und dem Ausdehnungsrohr 13 ist ein die
beiden verbindender Raum 14 vorhanden, der den waagerechten
Teil des T-förmigen Elementes bildet.

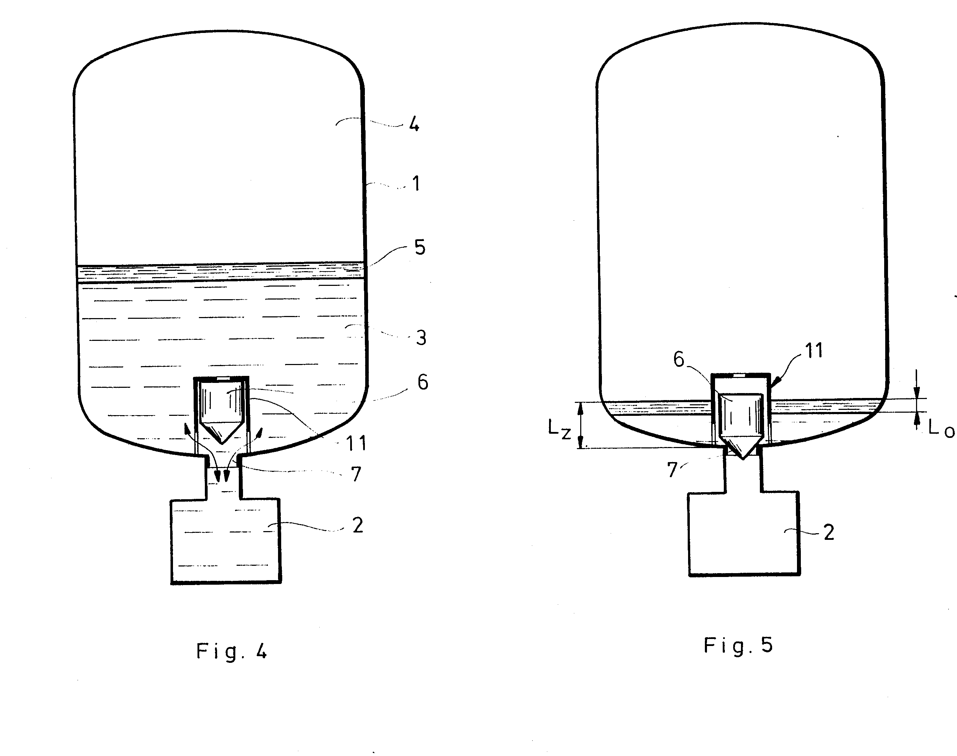

Bei der in Figuren 4 und 5 dargestellten Ausführung
ist der Entöler 11 in die das Übertragungsmittel einführende
Öffnung 7 derart eingebaut, dass der Fühler 6 mit der Öffnung
7 in unmittelbarer Verbindung steht.

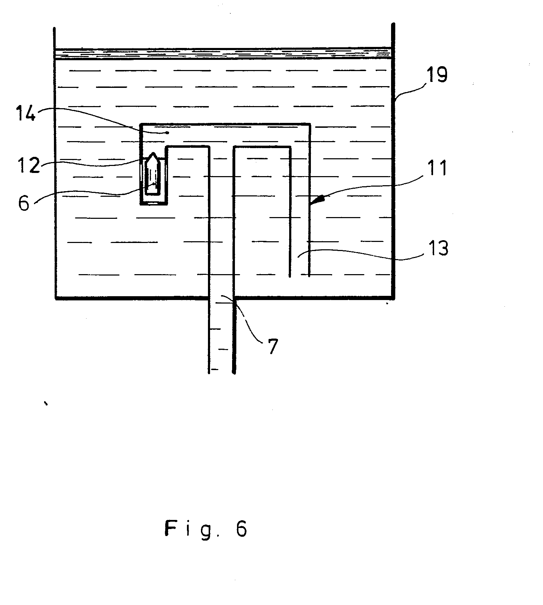

In dem in Fig. 6 dargestellten offenen Ausdehnungsbehälter 1 kann entweder der in Figuren 2 und 3 oder in Figuren 4 und 5 dargestellte Entöler 11 verwendet werden.

Der erfindungsgemässe Ausdehnungsbehälter arbeitet wie folgt:

Der über dem Übertragungsmittel 3 vorhandene Luftpolster 4 - bzw. bei einem offenen Ausdehnungsbehälter die
Atmosphäre - ermöglicht die Volumenänderung des Arbeitsmittels derart, dass sich inzwischen der Druck in dem
Ausdehnungsbehälter nur in geringem Masse verändert. Dies
kann auf verschiedene bekannte Weise, z.B. mit einem
Kompressor oder mit einem Gaspolster verwirklicht werden.
Das Eindringen des Sauerstoffes aus dem Gaspolster in das
Übertragungsmittel verhindert das Trennmittel 5, dessen
Dichte kleiner ist als die Dichte des Übertragungsmittels
3. Falls das System 2 undicht ist, wird das Eindringen des
Trennmittels 5 in das System 2 durch den aus dem Fühler 6
und dem Organ 8 bestehenden Entöler 11 verhindert. Falls
das Trennmittel 5 ein bestimmtes minimales Niveau erreicht,
versperrt das Organ 8 unter der Wirkung eines aus dem Fühler
6 kommenden Signals die Strömung des Übertragungsmittels 3
in Richtung des Systems 2. Die Ausbildung des Organs 8 ist
so beschaffen, dass es unabhängig von der Position des
Fühlers 6 die Strömung des Übertragungsmittels 3 in Richtung
des Ausdehnungsbehälters 1 immer ermöglicht.

Figuren 2 und 3 zeigen die Arbeitsweise des Entölers
11. Falls das System 2 betriebsmässig arbeitet, liegen die
Grenzflächen des Trennmittels 5 und des Übertragungsmittels
3 höher als das Öffnungsniveau $L_{NY}$. In diesem Fall ist der
Fühler 6, dessen Dichte viel kleiner ist als die Dichte des
Übertragungsmittels 3, in aufgehobener Lage und sperrt die
Abblasöffnung 12 ab, d.h. das Übertragungsmittel 3 strömt,
der Volumenänderung des Systems 2 entsprechend, durch das
Ausdehnungsrohr 13 entweder in den Ausdehnungsbehälter 1
ein oder aus dem Ausdehnungsbehälter 1 aus. Wenn das System
2 undicht ist, sinkt die Grenzfläche des Trennmittels 5 und
des Übertragungsmittels 3 unter das Öffnungsniveau $L_{NY}$, der
Fühler bewegt sich nach unten und legt die Abblasöffnung 12

0117389

frei. Dabei wird der im Raum 14 herrschende Druck mit dem Druck des Luftpolsters 4 identisch, so dass die Ausströmung des Übertragungsmittels 3 aus dem Behälter durch das Ausdehnungsrohr 13 aufhört. Auf diese Weise kann das Luftpolster 4 das System 2 verlassen, ohne dass das Trennmittel 5 aus dem Ausdehnungsbehälter 1 austritt.

Aus Fig. 2 geht auch klar hervor, dass sich das Übertragungsmittel 3 unter allen Umständen frei aus dem System 2 in Richtung des Ausdehnungsbehälters 1 bewegen kann und damit die sicherheitstechnische Bedingungen in höchstem Masse erfüllt werden.

Figuren 4 und 5 zeigen eine andere Ausführungsform des Entölers 11 in Arbeit. In Fig. 5 zeigt die Niveauhöhe $L_Z$ das Niveau des Trennmittels 3 in dem Moment, wenn sich der Fühler 6 schliesst, wobei $L_o$ die Dicke des Trennmittels 5 zeigt. Wenn das System 2 betriebsmässig arbeitet, steht die Oberfläche des Trennmittels 5 höher als das Niveau $L_Z$, deshalb ist der Fühler 6, dessen Dichte kleiner ist als die Dichte des Übertragungsmittels 3, in aufgehobener Lage und lässt die Einführöffnung 7 frei. Durch diese Öffnung 7 kann nun das Übertragungsmittel 3 - der Volumenveränderung des Systems entsprechend - unbehindert in den Ausdenhungsbehälter hinein- oder von dort hinaus strömen.

Falls wegen der Undichtheit des Systems 2 die Oberfläche des Trennmittels 5 unter das Niveau $L_Z$ hinabsinkt, sinkt auch der Fühler 6 ab und schliesst die Einführöffnung 7. Das Schliessen wird durch das im Behälter vorhandene Luftpolster 4 befördert, da dieses den Fühler 6 auf die Öffnung 7 drückt. Die Geschwindigkeit des Schliessens wird auch durch die Saugwirkung der in dem sich verringernden Durchlassquerschnitt beschleunigten Flüssigkeit erhöht. Damit das Trennmittel 5 nicht aus dem Ausdehnungsbehälter 1 austritt, muss die Dichte des Fühlers 6 so gewählt werden, dass die Voraussetzung $L_Z > L_o$ erfüllt wird.

0117389

PATENTANSPRÜCHE

1. Geschlossener oder offener Ausdehnungsbehälter, insbesondere zur Heizung, Kühlung bzw. zu anderen, sein Volumen veränderbares flüssiges Übertragungsmittel enthaltenden Systemen, bei welchem Ausdehnungsbehälter die das Übertragungsmittel einführende Öffnung am unteren Teil des Behälters angeordnet ist, und bei geschlossenem Behälter über dem Übertragungsmittel ein Luftpolster und beim offenen Behälter die Athmosphäre vorhanden ist, wobei zwischen dem Übertragungsmittel und dem Luftpolster ein Trennmittel vorhanden ist, dadurch g e k n n z e i c h n e t , dass der Ausdehnungsbehälter einen Entöler /11/ aufweist, der aus einem das Niveau des Übertragungsmittels /3/ fühlenden Fühler /6/ und aus einem damit in Verbindung stehenden, entweder zwischen dem Behälter /1/ und dem System /2/ oder in die Einführöffnung /7/ oder in den Behälter /1/ eingebauten, nur die Ausströmung des Übertragungsmittels /3/ und des Trennmittels /5/ unterbrechenden Organ /8/ besteht.

2. Ausdehnungsbehälter nach Anspruch 1, dadurch g e - k e n n z e i c h n e t , dass der Entöler /11/ aus einem Niveaufühler /6/, aus einer mit diesem in Verbindung stehenden Ausblasöffnung /12/, sowie aus einem Ausdehnungsrohr /13/ besteht, das in einen mit der Abblasöffnung /12/ gemeinsamen Raum /14/ einmündet und unter dem Öffnungsniveau /$L_{NY}$/ des Niveaufühlers /6/ endet.

3. Ausdehnungsbehälter nach Anspruch 1, dadurch g e - k e n n z e i c h n e t , dass der in die Einführöffnung /7/ eingebaute Entöler /11/ aus einem mit der Einführöffnung /7/ unmittelbar in Verbindung stehenden Niveaufühler /6/ besteht.

Fig. 1

0117389

Fig. 3

Fig. 2

Fig. 5

Fig. 4

Fig. 6